# FASCICULE DE BREVET EUROPEEN

(11) **EP 0 833 759 B1**
(45) Date de publication et mention de la délivrance du brevet: **03.02.1999**
(21) Numéro de dépôt: 96922947.5
(22) Date de dépôt: 19.06.1996
(51) Int. Cl.: B60M 1/34, B60L 5/40

(54) **ENSEMBLE D'ALIMENTATION ELECTRIQUE ET DE GUIDAGE LE LONG D'UN RAIL AU SOL POUR VEHICLE SUR ROUES**
STROMVERSORGUNGSEINRICHTUNG UND EINRICHTUNG ZUM FÜHREN EINER SCHIENE ENTLANG AM BODEN FÜR EIN RADFAHRZEUG
ELECTRICAL POWER SUPPLY AND GUIDANCE ASSEMBLY ALONG A GROUND RAIL FOR A WHEELED VEHICLE

(30) Priorité: 23.06.1995 FR 9507742
(43) Date de publication de la demande: 08.04.1998
(73) Titulaire: LOHR INDUSTRIE, 67980 Hangenbieten (FR)
(72) Inventeur: ANDRE, Jean-Luc, F-67210 Obernai (FR)
(74) Mandataire: Metz, Paul
(86) Numéro de dépôt international: FR9600942
(87) Numéro de publication internationale: WO9700787

(56) Documents cités:
- US-A- 4 238 010
- US-A- 4 239 094

## Description

La présente invention se rapporte à un ensemble d'alimentation électrique et de guidage le long d'un rail au sol pour un véhicule sur roues, notamment un véhicule routier urbain de transport de personnes.

On connait déjà des ensembles de guidage destinés à commander le train directeur, par exemple à roues indépendantes, d'un véhicule routier tel qu'un véhicule de transport en commun.

Les véhicules routiers à propulsion électrique sont classiquement alimentés au moyen de câbles aériens conducteurs de l'électricité ou caténaires disposés au dessus des pistes de circulation des véhicules.

Par souci d'esthétisme, on cherche actuellement à supprimer les lignes aériennes électrifiées et on se propose de combiner le guidage et l'alimentation électrique du véhicule routier, par exemple un trolleybus, au moyen d'une piste conductrice, matérialisée par exemple sous la forme d'un rail, rapportée sur la chaussée ou noyée dans celle-ci.

Néanmoins, cette solution se heurte à d'évidents problèmes de sécurité. Tout risque de contact volontaire ou accidentel entre un usager ou toute autre personne, et le ou les conducteurs électriques d'alimentation doit impérativement être exclu.

On connaît déjà le guidage d'un véhicule routier le long d'un rail au sol par un dispositif relevable équipé de galets disposés en "V". Ce type de guidage réclame que plusieurs conditions soient remplies simultanément pour assurer la sécurité du fonctionnement, de l'environnement et des personnes.

Tout d'abord, il convient de rappeler en permanence le dispositif pivotant de guidage vers le bas pour assurer le contact forcé avec la ou les pistes de roulement des galets afin d'éviter l'échappement de déraillement. Ce rappel ou cette pré-charge est assurée de façon traditionnelle par un vérin ou un ressort. On obtient le même effet par verrouillage des galets en enserrement sur le rail.

Ensuite, dans le cas prévu par l'invention de l'adjonction d'une alimentation électrique par le sol et plus spécifiquement par le profilé de guidage, il importe d'interdire l'accès au(x) conducteur(s) d'alimentation électrique par un cache ou un recouvrement de protection sous lequel pénètre(nt) la ou les pièce(s) de contact. Cette interdiction est dictée par des impératifs de protection à l'égard du milieu extérieur : intempéries, propreté, mais aussi à l'égard de personnes qui, par malveillance ou par inadvertance pourraient entrer en contact avec les conducteurs et s'exposer ainsi efficacement au risque d'électrocution.

Finalement, pour des raisons de bruit et d'usure des galets, ceux-ci doivent présenter un diamètre important qui semble à priori incompatible avec les impératifs de faible hauteur liés à la moindre garde au sol réclamée pour ce genre de véhicules en vue d'en faciliter l'accès à partir du quai.

La sécurité par rapport au milieu extérieur peut être améliorée par l'isolement en tronçons électriquement indépendants du conducteur relié à la borne active de la source électrique au fur et à mesure de l'avance du véhicule.

La présente invention se propose de remédier efficacement à cette difficulté ainsi qu'à d'autres en proposant un ensemble d'alimentation-guidage d'un véhicule de transport sur roues - ayant les caractéristiques de la Revendication 1

Plus Particulièrement, selon l'une des variantes le dispositif d'alimentation-guidage est complété en sous-face par un organe collecteur de l'électricité présentant à son extrémité terminale une pièce de frottement assurant le contact avec des barres conductrices pour la conduction de l'une des autres phases ou pôle du courant électrique vers les moteurs de propulsion électrique du véhicule routier.

Selon un avantage essentiel de la présente invention, toutes les barres conductrices du courant d'alimentation sont disposées en partie inférieure sous le niveau de l'âme du rail incorporé dans la chaussée, le rail étant préférentiellement obturé par une ou deux pièces de recouvrement formant fermeture à glissière(s). Cette ou ces glissière(s) s'ouvrent localement au passage de la tête de guidage et se referment ensuite automatiquement. De cette façon, tout risque d'électrocution accidentelle est exclu.

Selon un autre avantage de l'invention, l'alimentation électrique s'effectue selon un sectionnement électrique en tronçons d'au moins un des conducteurs dont la mise sous tension s'effectue au fur et à mesure de l'avancement du véhicule en étant déclenchée par l'arrivée de celui-ci.

L'ensemble d'alimentation-guidage selon l'invention s'applique à tous les types et formes de courants d'alimentation. Une première phase ou pôle de la source d'alimentation est raccordée à la piste de roulement des galets et l'autre ou les autres aux barres conductrices ou à chacun des conducteurs courant à l'intérieur du rail le long de celui-ci.

La présente invention a pour but de regrouper sur une même unité fonctionnelle de guidage au sol par un dispositif relevable les différentes caractéristiques souhaitables et nécessaires à l'alimentation électrique simultanée par le rail de guidage au sol.

D'une façon générale l'invention a comme triple but d'assurer simultanément le guidage, l'alimentation électrique et la sécurité électrique pour les personnes.

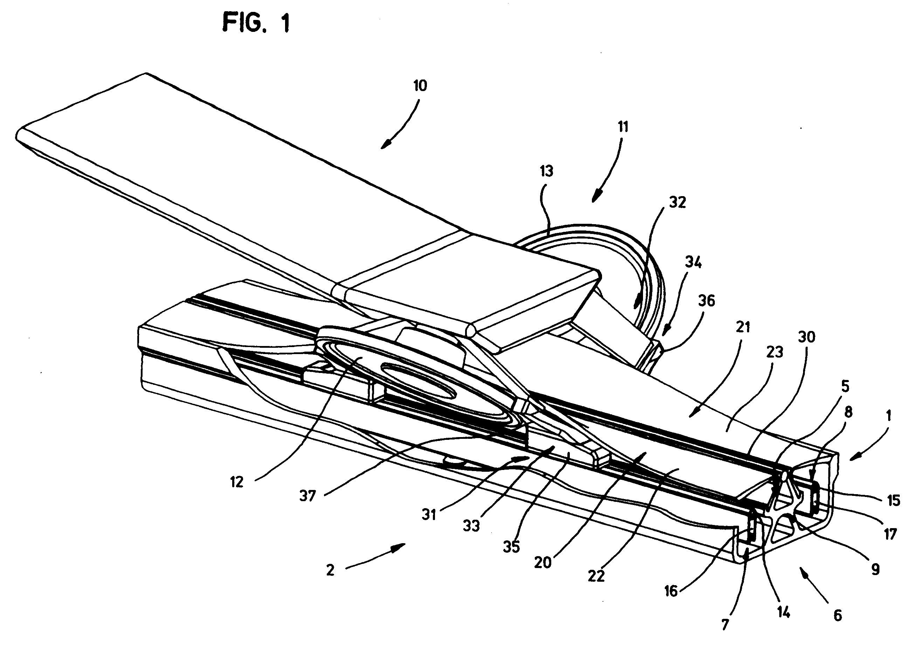

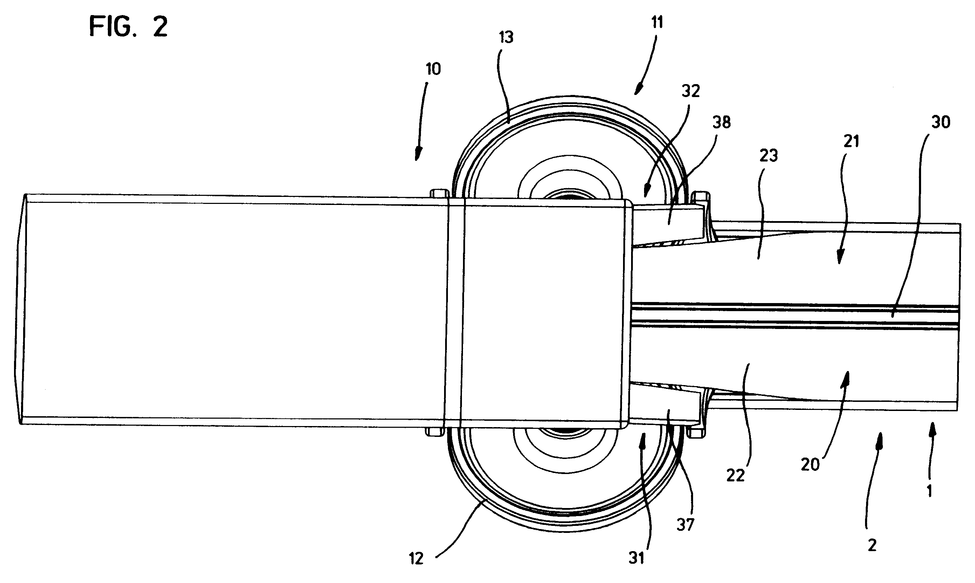

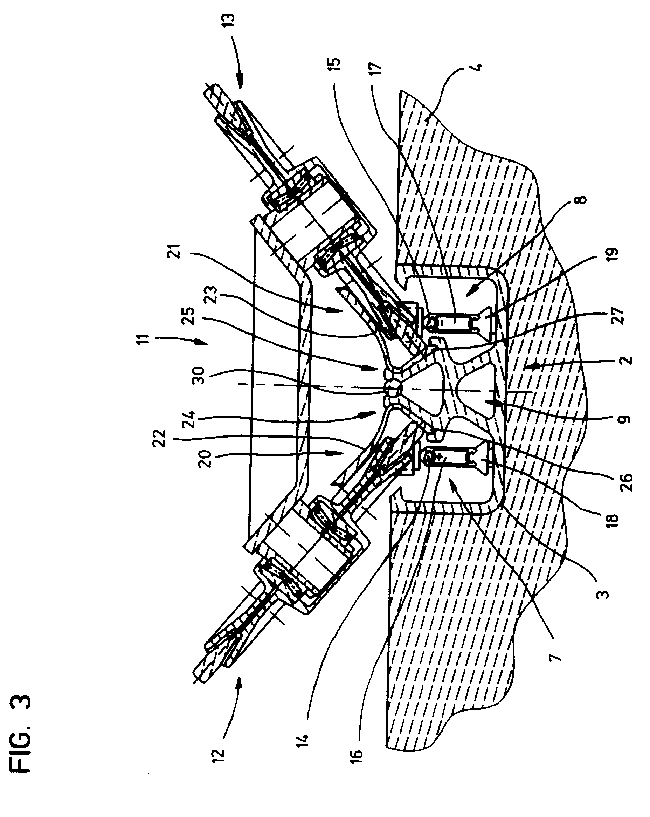

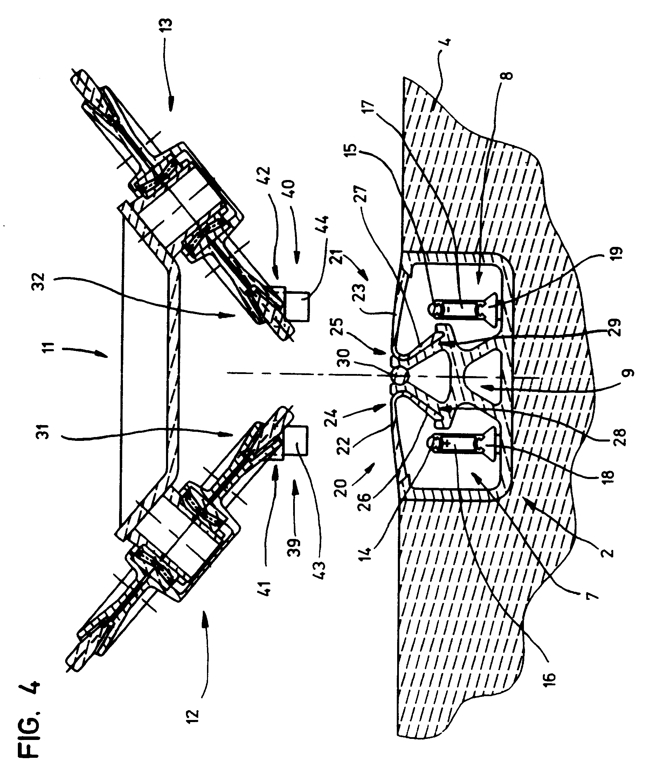

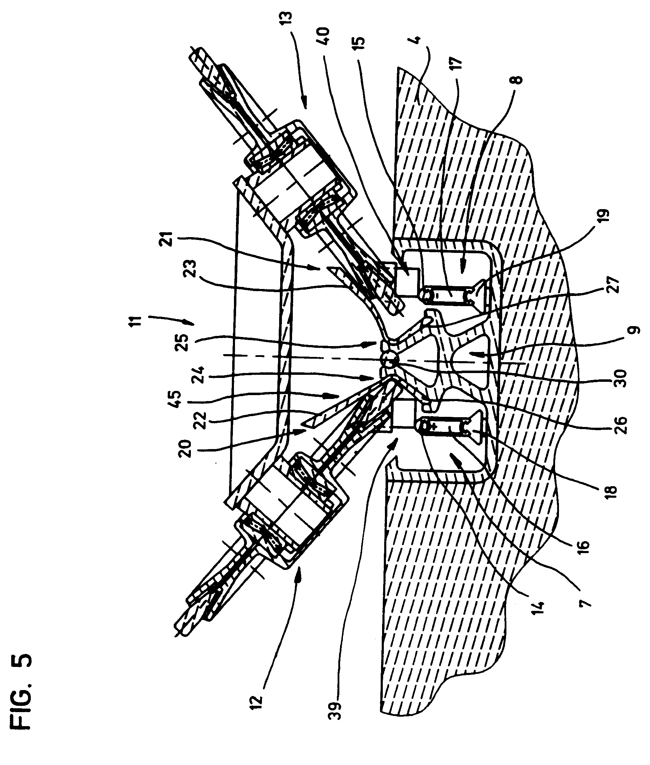

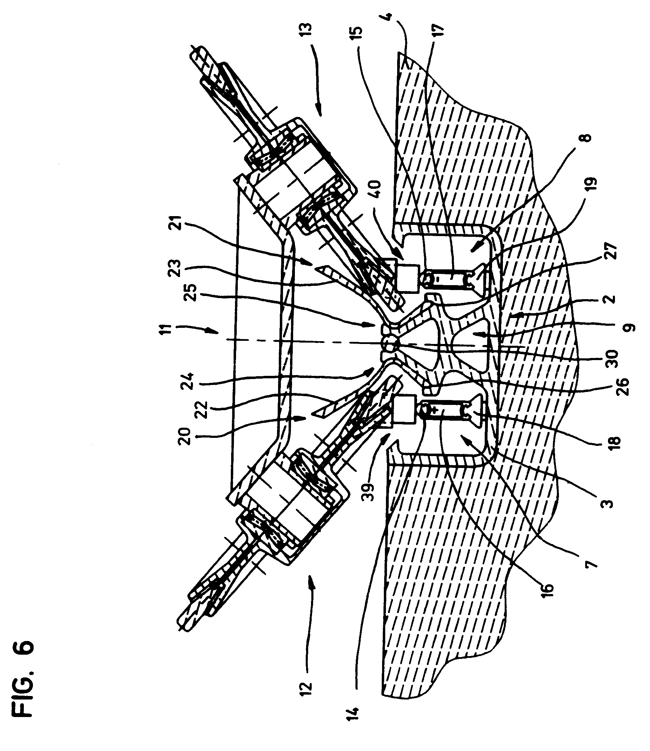

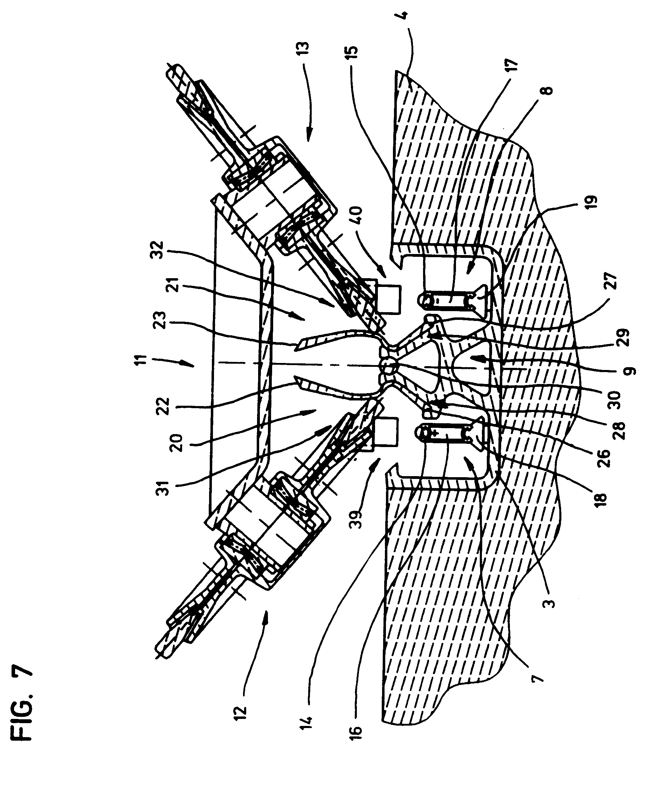

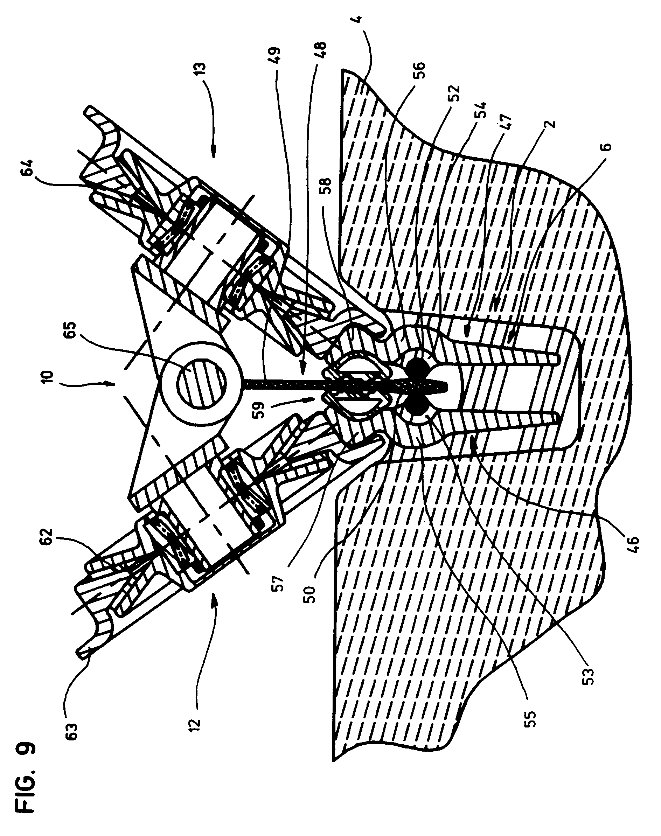

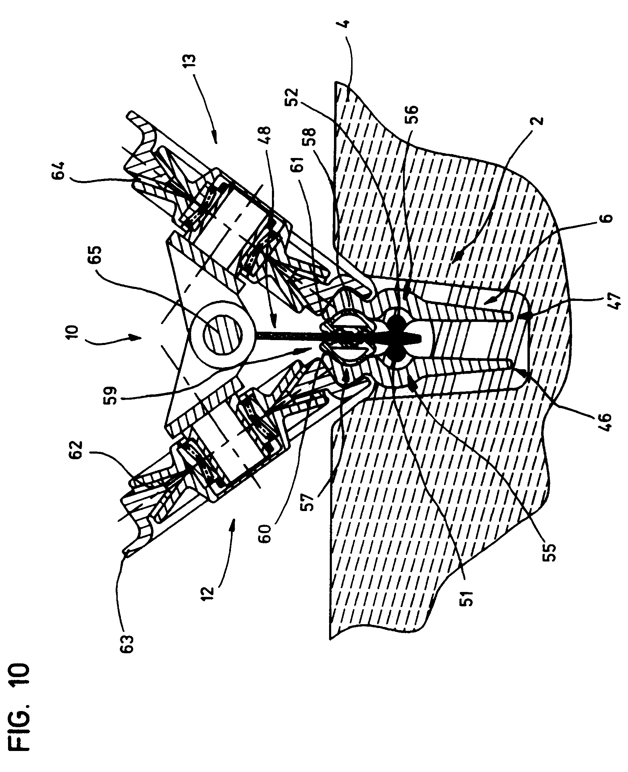

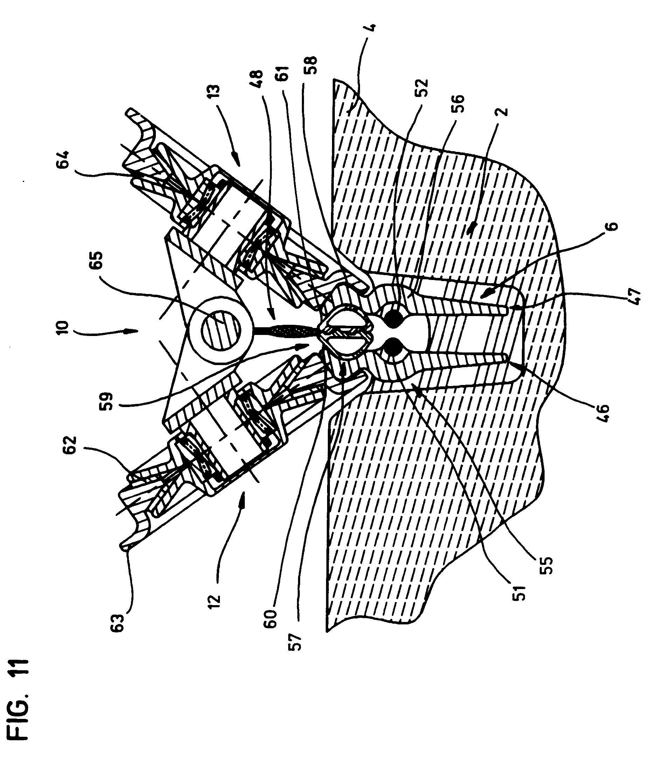

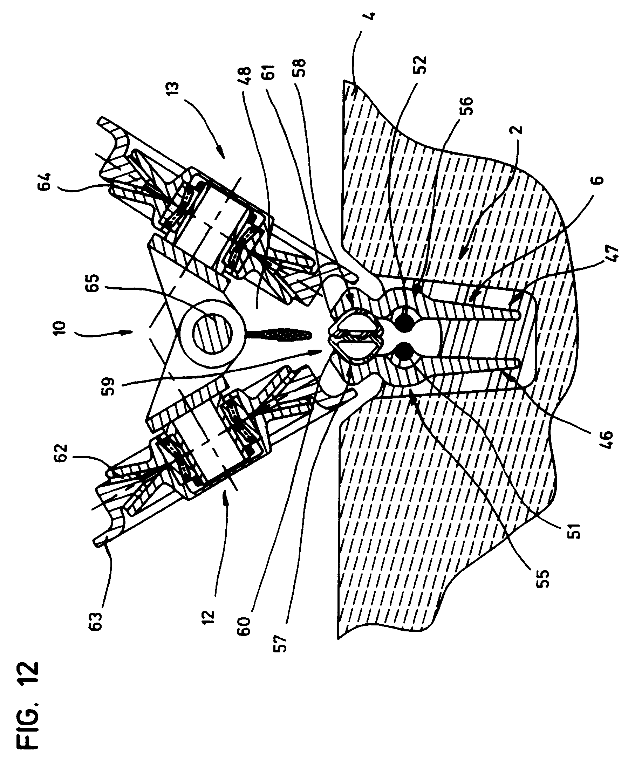

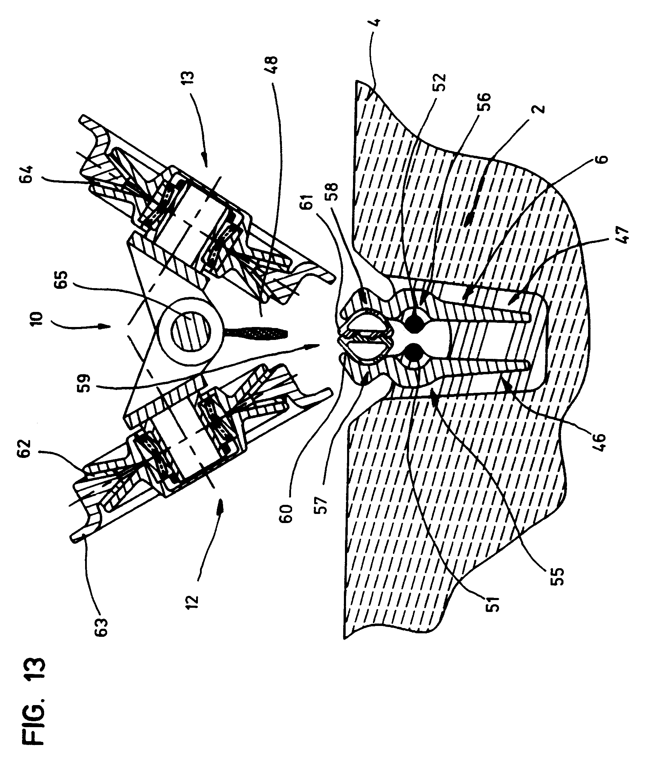

D'autres caractéristiques et avantages de l'invention apparaîtront dans la description qui suit, donnée à titre d'exemple et accompagnée des dessins qui représentent :
. la figure 1 : une vue générale en perspective d'ensemble avec écorché au niveau des galets et du support porte-contacts et de soulèvement du premier mode d'exécution ;
. la figure 2 : une vue en plan du premier mode d'exécution ;
. les figures 3 et 4 : des coupes transversales respectivement de fonctionnement et à l'état relevé :
. la figure 5 : une coupe transversale schématique illustrant les positions des galets dans un virage ;
. les figures 6, 7 et 8 : des coupes transversales schématiques montrant le soulèvement des lèvres entre trois positions dont deux positions extrêmes lors du mouvement vertical d'extraction des galets ;
. la figure 9 : une vue en coupe transversale d'une variante à pièce de recouvrement du type à ouverture médiane ;
. les figures 10 à 13 : des coupes transversales schématiques illustrant la montée de la tête de guidage et la sortie de la pièce de contact électrique de la glissière.

L'ensemble de guidage et d'alimentation selon l'invention peut se réaliser sous deux modes différents représentés respectivement sur les figures 1 à 8 et 9 à 13.

Il met en oeuvre un porteur quelconque de galets par exemple un chariot et fait partie d'un ensemble sur lequel il est monté librement mobile en pivotement.

Le corps 1 d'un rail 2 de guidage et d'alimentation électrique à paroi de fond 3 est rapporté sur la chaussée 4 mais de préférence encastré dans celle-ci de manière à présenter une surface supérieure généralement sensiblement affleurante avec le plan de roulage du véhicule.

Le corps de ce rail présente un profil général en forme de U à face supérieure 5 ouverte vers le haut avec une âme centrale 6 de guidage partageant le volume intérieur en deux compartiments tubulaires 7 et 8.

L'âme centrale 6 est un profilé de guidage 9 servant de piste de roulement à des galets de guidage alors que le corps 1 du rail 2 au sol assure la protection et la rigidité mécaniques de l'ensemble du rail.

Le guidage est assuré par un porteur quelconque de galets par exemple un chariot, selon le mode représenté il s'agit par exemple d'un bras pivotant 10, pourvu à son extrémité avant d'une tête de guidage 11 équipée de moyens de roulement sous la forme d'un couple de deux galets 12 et 13 disposés en "V" selon un angle constant largement ouvert.

Cet angle est souhaité le plus grand possible. Sa valeur avoisine 90° et peut atteindre par exemple 120° pour diminuer l'encombrement en hauteur et permettre l'utilisation de galets de plus grands diamètres pour lesquels l'usure, la vitesse de rotation et donc le bruit sont moindres.

Le dispositif 10 de guidage est représenté en tant que bras, mais il peut affecter bien d'autres formes générales, par exemple un support mobile, pivotant.

Selon la première variante, les deux compartiments tubulaires 7 et 8 du volume intérieur du rail 2 sont occupés par des conducteurs d'alimentation sous la forme chacun d'un élément filaire 14 et 15, câble, barre ou autre enchâssé dans un support de maintien 16 et 17 monté chacun sur un isolant électrique 18 et 19 perpendiculairement à la paroi de fond 3 du rail 2.

Il existe au moins un élément filaire conducteur d'alimentation 14 ou 15 pour chacun des compartiments tubulaires 7 ou 8 et donc pour chaque pôle ou chaque phase de la source de courant.

La face supérieure ouverte du corps 1 du rail 2 de guidage au sol est recouverte par deux pièces de protection 20 et 21 formant chacune dans leur partie supérieure recouvrante une lèvre adjacente 22 et 23 flexible par rapport à la ligne médiane pour recouvrir chacune une demi-partie de la face supérieure ouverte du rail. Les lèvres peuvent fléchir par soulèvement autour d'une arête 24 ou 25 filant le long de la partie médiane supérieure de l'âme du rail.

Chaque pièce de protection 20 ou 21 est un profilé à section transversale en équerre. Elle se compose de la lèvre 22 ou 23 constituant l'aile supérieure de recouvrement et d'une aile inférieure 26 ou 27 formant une piste de roulement. Cette aile inférieure est encastrée dans l'âme centrale. Les ailes sont réunies entre elles selon les arêtes 24 ou 25.

L'âme centrale de guidage 6 du rail 2 est formée du profilé de guidage 9 central et symétrique présentant de chaque côté un logement-rainure 28 ou 29 incliné dans lequel est encastrée l'aile inférieure 26 ou 27 de chaque pièce de recouvrement 20 ou 21.

Les logements-rainures 28 ou 29 sont séparés au sommet de l'âme centrale 6 par un jonc rectiligne de blocage 30.

Ce jonc 30 assure la sécurité nécessaire au maintien des pièces de protection par un effet de pincement.

En raison de la flexibilité de la matière de l'âme 6, la présence du jonc 30 assure une précontrainte en écartement retenant ainsi par pincement dans leur logement d'encastrement chaque aile inférieure 26 ou 27 des pièces de recouvrement 20 ou 21 qui ne peuvent être extraites qu'après enlèvement du jonc 30.

Dans la version représentée, chaque galet 12 ou 13 fait partie d'un ensemble porte-contacts et de soulèvement gauche 31 ou droite 32 formé chacun de deux parties identiques, par exemple 33 ou 34, se répétant de façon symétrique par rapport aux plans verticaux médians respectivement transversai et longitudinal.

Ces ensembles porteurs 31 ou 32 ont pour but de soulever localement et en continu chaque lèvre de protection 22 et 23 afin d'assurer le dégagement nécessaire au passage de chaque galet 12 ou 13 et le captage du courant électrique d'alimentation des moteurs de la motrice.

Ils se composent chacun de façon générale des éléments suivants.

Pour chaque ensemble, une structure en sabot par exemple incliné 35 ou 36, conformé en soc, est montée à l'avant et reliée au bloc mécanique de la tête de guidage 11 par une patte de liaison 37 ou 38 en biais. La partie arrière du sabot sert de support à un support porte-contact 39 ou 40 dans lequel est montée coulissante en rappel élastique vers le bas par 41,42, une pièce de contact électrique 43,44, classiquement en carbone, destinée à frotter à la manière d'un patin sur le conducteur 14 ou 15 en vue du captage du courant d'alimentation.

Dans la version représentée la structure en sabot 35 ou 36, intégrant le support porte-contact 39,40 se répète à l'identique à l'arrière du galet. Cette conformation symétrique permet de disposer à l'arrière de chaque galet d'une deuxième pièce de contact et d'assurer ainsi un meilleur captage du courant qui est de forte intensité et le cas échéant la possibilité d'un déplacement dans l'autre sens.

Cette conformation à contact avant et arrière permet aussi par exemple l'alimentation sur deux phases à conducteurs correctement isolés entre eux, l'une à l'avant et l'autre à l'arrière.

La face externe de l'aile inférieure 26,27 habille le logement-rainure 28 ou 29 et sa face interne sert de piste de roulement pour le galet correspondant 12,13 qui, en raison de la plus faible largeur de sa surface de roulement, dispose sur cette piste d'une latitude de déplacement latéral par rapport à la face oblique.

Comme représenté sur la figure 5, celle-ci est utilisée dans les virages. La force centrifuge provoque la remontée du galet le long de la face interne de l'aile inférieure utilisée comme piste de roulement jusqu'à butée au niveau de l'angle de l'équerre c'est-à-dire de la zone d'arête 24 ou 25 et léger soulèvement de la lèvre correspondante.

Les grandes ailes ou lèvres 22 ou 23 de chaque pièce de recouvrement Présentent une flexibilité suffisante pour affecter une position quasi verticale sous l'effet de la force nécessaire au relevage des galets, permettant l'extraction de ceux-ci sans modification de leur inclinaison.

Cette flexibilité associée au poids procure par ailleurs une force de rappel élastique vers le bas qui contraint la tête de guidage 11 en appui permanent contre le rail 2, évitant ainsi tout moyen de précharge par vérin ou ressort.

On peut constater sur les figures 5 à 8 le rôle de l'arête d'équerre, ou plutôt la forme en cornière de la zone arête qu'affectent entre elles les zones d'extrémité des deux ailes supérieures 22 ou 23 de la pièce de protection partiellement encastrée dans le profilé logement-rainure.

Cette zone d'arête est bloquée à calage par le logement-rainure.

Elle remplit une quadruple fonction.

Elle forme d'abord une bordure de butée 45 pour le flanc du galet qui est contraint en élévation par la force centrifuge dans le virage.

Elle réalise aussi une zone résistante à vaincre par la force verticale d'une certaine importance nécessaire au soulèvement du dispositif.

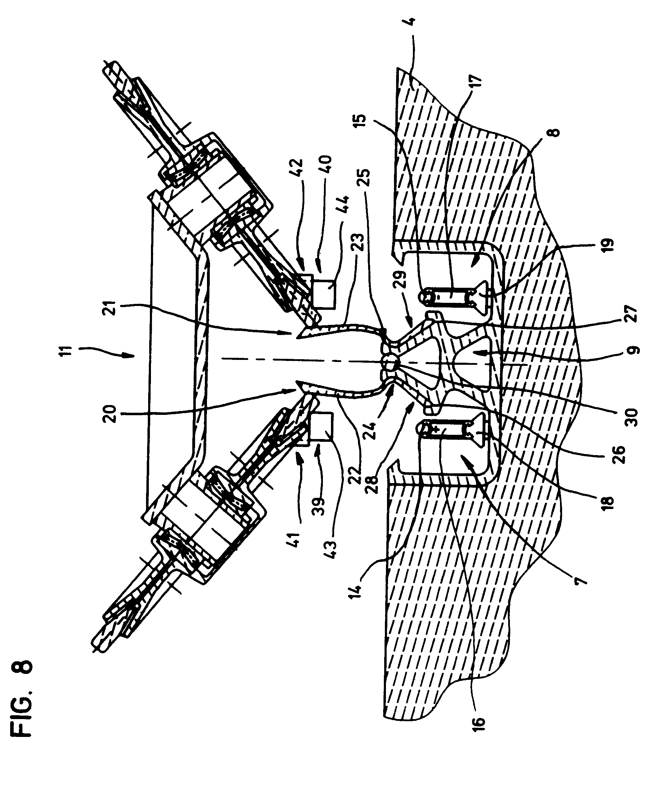

Elle assure ensuite la retenue de la protection par son encastrement lors du mouvement de relevage vertical du bras, au cours duquel les lèvres se dressent en incurvation presque verticale pour permettre l'échappement des galets (figure 8).

Elle permet finalement grâce à sa flexibilité générale et à sa zone plus restreinte de travail qui supporte les plus grands efforts de fléchissement d'assurer un rappel élastique vers le bas qui évite de prévoir une pré-charge sur le bras à l'aide d'un vérin ou d'un ressort.

Cet effet de rappel permet d'éviter le soulèvement intempestif du bras en fonctionnement.

Afin d'améliorer la sécurité électrique, on prévoit selon l'invention de partager au moins un conducteur électrique, de préférence celui relié sur pôle positif, en tronçons électriquement indépendants mis en tension par l'arrière du véhicule et mis hors tension par son éloignement du tronçon. La fraction de longueur du conducteur n'est donc sous tension que pendant le passage du véhicule.

Cette particularité permet de renforcer la sécurité liée au danger d'ordre électrique par rapport aux personnes.

La seconde variante représentée sur les figures de 9 à 13 met en oeuvre un porteur quelconque de galets par exemple un chariot. Sous la forme représentée, il comporte un bras pivotant relevable référencé également 10 préférentiellement installé en partie terminale avant du châssis du véhicule et commandant le train directeur de celui-ci par ses variations de position angulaire.

Le bras pivotant 10 est équipé des deux galets inclinés en "V" tels que 12 et 13 destinés à rouler sur l'âme centrale de guidage 6 du rail 2 au sol. Celle-ci constitue une piste conductrice double pour l'alimentation des moyens de propulsion électrique du véhicule routier, matérialisée de préférence sous la forme de deux profilés de guidage 46 et 47 parallèles propres à chaque galet. Les profilés de guidage 46 et 47 sont logés dans le volume intérieur du corps du rail et immobilisés dans cet espace par une matière électriquement isolante, correctement isolés par rapport à la terre. Le corps est encastré dans la chaussée en fond de tranchée ou de caniveau ménagé dans la chaussée à l'intérieur du corps 1 de protection mécanique et de fixation de l'âme centrale 6.

Le bras pivotant de guidage est équipé d'au moins un collecteur de courant 48 sous la forme d'une lame verticale conductrice 49 prolongée par un patin 50 de frottement engagé en contact étroit entre deux barres conductrices ou éléments filaires 51 et 52 disposés en regard dans l'espace intérieur délimité par les deux profilés de guidage de l'âme centrale 6.

Les conducteurs sont partiellement noyés dans un intercalaire électrique isolant 53 ou 54 assurant leur maintien et un rappel élastique de contact électrique et de rattrapage d'usure en position de rapprochement.

Comme indiqué, la tête 11 du bras pivotant de guidage 10 selon l'invention est de forme générale en "V" ouvert sur le haut et porte sur chacune de ses deux branches un galet de roulement 12 et 13 dont le profil de gorge est adapté pour venir en appui de contact mécanique de roulement et/ou électrique sur les épaulements latéraux Correspondants des profilés de guidage 46 et 47.

Préférentiellement, mais non exclusivement, le captage du courant sur le profilé de guidage peut être réalisé par un ou deux frotteurs séparés disposés à l'avant et à l'arrière de chaque galet. Il s'agit toujours du retour électrique.

Le collecteur 48, disposé en sous-face du bras pivotant, s'étend verticalement vers le bas, de façon que son patin 50 de frottement vienne s'engager en contact étroit entre les barres conductrices 51 et 52 après écartement de celles-ci. Elles sont reliées à un seul et même pôle de la source de courant d'alimentation des moyens de propulsion électrique du véhicule.

A cette fin, on conforme chacune des faces latérales en regard des profilés de guidage selon une gorge longitudinale médiane 55,56 destinée à recevoir l'une des barres conductrices 51 ou 52. L'intercalaire électriquement isolant 53 ou 54 assurant en même temps le maintien mécanique des barres conductrices 51 ou 52 est rapporté en fond de gorge, entre chacune des barres et le demi-profilé de guidage qui la porte.

Une gorge longitudinale supérieure 57,58 est conformée dans chacune des parties supérieures des faces latérales en regard des profilés de guidage, au-dessus de celle destinée à recevoir la barre conductrice.

La pièce formant collecteur est soit fixe et dans ce cas, elle se relève avec la tête de guidage, soit mobile, par exemple basculante, et dans ce cas elle pivote vers le haut avec ou après la montée du bras. Ainsi son mouvement vers sa condition inopérante est dépendant ou indépendant de celui du bras.

Les gorges supérieures portent une protection anti-pénétration sous la forme d'une fermeture linéaire 59 à glissière constituée de deux profilés creux identiques 60 et 61 en matière souple logés dans les gorges supérieures. Ces profilés présentent une section transversale en demi-lune. Les faces avant sont disposées en regard. Ces dimensions sont telles qu'au repos les faces en regard sont jointives. En raison de l'élasticité des profilés et de leur structure creuse, les faces en regard peuvent s'effacer par écrasement pour réaliser l'écartement local qui permettra le passage de la lame conductrice constituant ainsi une véritable glissière qui obture de façon étanche, mais rend également inaccessible à l'usager du moyen de transport ou toute autre personne, l'espace intérieur aux deux demi-rails dans lequel sont disposées les barres conductrices.

Comme indiqué, les profilés creux présentent une élasticité suffisante pour pouvoir s'écarter l'un de l'autre transversalement afin de permettre l'engagement de la lame conductrice du collecteur et son avance lorsque le véhicule est en marche ce qui se traduit par une ouverture locale mobile continument le long de la glissière, ouverture provoquée par le passage du collecteur et se refermant sur son passage.

Avantageusement, les faces en regard des profilés creux présentent des formes géométriques complémentaires ou des formes en chicanes de façon à améliorer l'étanchéité de fermeture de l'espace intérieur entre les rails en l'absence du collecteur et rendre difficile voire impossible l'accès aux conducteurs.

Les moyens de roulement de la tête d'alimentation-guidage selon l'invention sont constitués d'un couple de galets 12 et 13 inclinés en "V" de même conformation comportant chacun un axe de roulement solidaire du bras-pivotant sur lequel est monté à rotation un corps de galet par l'intermédiaire d'un roulement. Sur la gorge périphérique 62 du corps de galet est montée une couronne de roulement 63 présentant une tenue mécanique suffisante pour résister efficacement aux contraintes mécaniques de roulement, en particulier à l'usure. Les couronnes de roulement 63 sont montées dans le profil intérieur de la gorge par, éventuellement, l'intermédiaire de garnitures 64 en matière élastique électriquement isolante, par exemple en élastomère, pour l'isolement et permettant le rattrapage de tout jeu fonctionnel et l'absorption du déport latéral dans les courbes. Ces garnitures qui assurent l'isolation électrique et la force de rappel en rapprochement permettent aussi d'absorber les vibrations mécaniques.

Il y a lieu de préciser ici que les conducteurs peuvent être multiples et que d'autres phases de l'alimentation pourraient être captées à différents niveaux de profondeur.

Selon une variante, les galets sont mobiles en écartement autour d'un axe longitudinal de pivotement 65 pour permettre leur extraction du rail de guidage et sont rétablis en prise avec léger pincement en position de roulage le long des rails de guidage.

Comme pour le mode d'exécution précédent, on réalise l'alimentation électrique des rails de guidage par des tronçons de longueur prédéterminée, électriquement indépendants, d'une longueur maximale par exemple voisine de la longueur du véhicule apportant une discontinuité électrique du ou des conducteurs actifs et non sur le retour. Cet arrangement est réalisé de façon que les contacts électriques d'alimentation frottent en permanence sur un tronçon alimenté alors que les tronçons voisins sont hors tension. On alimente les tronçons au fur et à mesure de l'avance du véhicule c'est-à-dire que l'arrivée du véhicule à la proximité du tronçon suivant déclenche son alimentation et inversement la coupe après le passage de l'extrémité arrière.

## Revendications

1. Ensemble de guidage et d'alimentation électrique d'un véhicule de transport sur roues à partir d'un rail (2) de guidage au sol et d'un support pivotant (10) coopérant avec le rail de guidage, support pivotant (10) présentant une tête de guidage (11) pourvue d'au moins un couple de galets (12) et (13) inclinés en "V" à pointe dirigée vers le bas, caractérisé en ce que le rail au sol (2) présente une âme centrale (6) de guidage utilisée par les galets (12) et (13) du support pivotant de guidage (10) comme piste de roulement, et des conducteurs d'alimentation électrique, l'âme centrale (6) portant des pièces de protection (20),(21) constituant une fermeture linéaire de l'espace renfermant les conducteurs en dehors de la zone de passage de la tête de guidage (11) qui provoque l'ouverture momentanée de cette fermeture pour le passage des pièces de contact en appui sur les conducteurs.

2. Ensemble selon la revendication 1 caractérisé en ce que les pièces de protection (20) ou (21) sont deux pièces de recouvrement en matière flexible formant des lèvres (22) ou (23) montées à fléchissement sur l'âme centrale (6).

3. Ensemble selon la revendication 1 caractérisé en ce que la tête de guidage (11) présente sur au moins un côté de chaque galet (12), (13) un support porte-contact (39) ou (40) et un moyen de soulèvement de la lèvre adjacente (22) ou (23).

4. Ensemble selon la revendication 3 caractérisé en ce que le support porte-contact (39) ou (40) et le moyen de soulèvement sont portés par une même patte de liaison (37) ou (38) à la tête de guidage (11).

5. Ensemble selon la revendication 3 ou 4 caractérisé en ce que la tête de guidage (11) présente sur l'avant et l'arrière de chaque galet (12) ou (13) un support porte-contact (39) ou (40) et un moyen de soulèvement de la lèvre adjacente (22) ou (23).

6. Ensemble selon la revendication 2 caractérisé en ce que les pièces de protection (20) ou (21) présentent une section en forme d'équerre à deux ailes (26) ou (27) réunies entre elles par une zone d'arête (24) ou (25) dont une aile inférieure (26) et une aile supérieure (27).

7. Ensemble selon la revendication 2 caractérisé en ce que l'âme centrale (6) présente deux logements-rainures (28) ou (29) à épaulement supérieur et à gorge inférieure de maintien dans chacun desquels est encastrée l'aile inférieure d'une pièce de protection (20 ou (21), la face interne de chaque aile inférieure (26) ou (27) servant de piste de roulement à chaque galet (12 ou (13).

8. Ensemble selon la revendication 6 ou 7 caractérisé en ce que la zone d'arête (24) ou (25) prend appui sur l'épaulement supérieur qui sert de butée vers le haut.

9. Ensemble selon la revendication 3 caractérisé en ce que chaque support porte-contact (39) ou (40) et de soulèvement comporte un sabot (35) ou (36) avant ou arrière en forme de soc destiné à dévier vers le haut la lèvre supérieure (22) ou (23) de la pièce de protection (20) ou (21) pour la soulever et permettre le passage des galets (12 ou (13) et des pièces de contact.

10. Ensemble selon la revendication 1 caractérisé en ce que l'âme centrale (6) est formée de deux pièces symétriques formant un profilé de guidage (9) pour les galets (12) ou (13), les parties supérieures de ces profilés (9) étant occupées par la fermeture linéaire (52) à glissière réalisée sous la forme de deux profilés (60) ou (61) creux a section en demi-lune disposés en regard, face plane contre face plane.

11. Ensemble selon la revendication 10 caractérisé en ce que les profilés de guidage (9) présentent dans leur espace intérieur deux conducteurs montés chacun en rappel élastique de rapprochement par un intercalaire isolant, conducteurs délimitant entre eux un intervalle susceptible de s'agrandir sous l'effet de l'introduction d'une pièce de contact (49) de plus grande épaisseur.

12. Ensemble selon la revendication 10 ou 11 caractérisé en ce que les profilés de guidage (9) et les galets (12) et (13) assurent le retour du courant électrique.

13. Ensemble selon la revendication 10 ou 11 caractérisé en ce que le retour du courant électrique est assuré par des contacts distincts des galets (12) et (13) frottant sur les profilés.

14. Ensemble selon la revendication 10 ou 11 caractérisé en ce que les faces en regard des profilés creux (60) ou (61) constituant la fermeture linéaire (59) à glissière présentent des formes complémentaires ou des formes en chicane.

15. Ensemble selon la revendication 10 ou 11 caractérisé en ce que la pièce de contact (49) est du type à lame.

16. Ensemble selon la revendication 1, caractérisé en ce que le conducteur d'alimentation électrique relié à la borne active est réalisé en tronçons électriquement indépendants pour sa mise sous tension juste avant l'arrivée de la tête de guidage (11) et sa mise hors tension juste après son départ.

17. Ensemble selon la revendication 1, caractérisé en ce que la valeur de l'angle d'écartement entre les galets (12) et (13) est supérieure à 90°.

18. Ensemble selon la revendication 1 caractérisé en ce que la valeur de l'angle d'écartement entre les galets est supérieure à 120°.

## Claims

1. Assembly for guiding and for the electrical supply of a wheeled transport vehicle from a guide rail (2) on the ground and from a pivoting support (10) cooperating with the guide rail, which pivoting support (10) has a guide head (11) provided with at least one pair of rollers (12) and (13) inclined in the form of a "V" with the point directed downwards, characterised in that the rail (2) on the ground has a central guide web (6) which is used by the rollers (12) and (13) of the pivoting guide support (10) as a running path, and electrical supply conductors, the central web (6) carrying protective members (20, 21) constituting a linear closure means for the space containing the conductors outside the region of passage of the guide head (11) which brings about the momentary opening of the closure means for the passage of the contact members resting on the conductors.

2. Assembly according to claim 1, characterised in that the protective members (20) or (21) are two covering members of flexible material forming lips (22) or (23) mounted in a flexing manner on the central web (6).

3. Assembly according to claim 1, characterised in that the guide head (11) has, to at least one side of each roller (12, 13) a contact-carrying support (39) or (40) and a means for lifting the adjacent lip (22) or (23).

4. Assembly according to claim 3, characterised in that the contact-carrying support (39) or (40) and the lifting means are carried by the same connecting limb (37) or (38) on the guide head (11).

5. Assembly according to claim 3 or 4, characterised in that the guide head (11) has, to the front and back of each roller (12) or (13), a contact-carrying support (39) or (40) and a means for lifting the adjacent lip (22) or (23).

6. Assembly according to claim 2, characterised in that the protective members (20) or (21) have an angled cross-section having two wings (26) or (27) connected to one another by a ridge region (24) or (25), of which one is a lower wing (26) and one is an upper wing (27).

7. Assembly according to claim 2, characterised in that the central web (6) has two slot-form housings (28) or (29) having an upper shoulder and a lower groove for support in each of which is fitted the lower wing of a protective member (20) or (21), the internal face of each lower wing (26) or (27) acting as a running path for each roller (12) or (13).

8. Assembly according to claim 6 or 7, characterised in that the ridge region (24) or (25) rests on the upper shoulder acting as an abutment towards the top.

9. Assembly according to claim 3, characterised in that each lifting and contact-carrying support (39) or (40) comprises a front or rear shoe (35) or (36) in the form of a plough that is to deflect upwards the upper lip (22) or (23) of the protective member (20) or (21) in order to lift it and allow the rollers (12) or (13) and the contact members to pass through.

10. Assembly according to claim 1, characterised in that the central web (6) is formed from two symmetrical pieces forming a guide profile (9) for the rollers (12) or (13), the upper portions of those profiles (9) being occupied by the linear slide-form closure means (52) which is made in the form of two hollow profiles (60) or (61) having a half-moon cross-section which are arranged opposite one another, flat face against flat face.

11. Assembly according to claim 10, characterised in that the guide profiles (9) have in their interior space two conductors which are each mounted to be resiliently urged towards one another by means of an insulating insert, the conductors delimiting between them a gap capable of increasing under the effect of the introduction of a contact member (49) of greater thickness.

12. Assembly according to claim 10 or 11, characterised in that the guide profiles (9) and the rollers (12) and (13) provide the return path for the electric current.

13. Assembly according to claim 10 or 11, characterised in that the return path for the electric current is provided by contacts separate from the rollers (12) and (13) rubbing on the profiles.

14. Assembly according to claim 10 or 11, characterised in that the opposing faces of the hollow profiles (60) or (61) constituting the linear slide-form closure means (59) have complementary forms or are in serpentine form.

15. Assembly according to claim 10 or 11, characterised in that the contact member (49) is of the blade type.

16. Assembly according to claim 1, characterised in that the electrical supply conductor connected to the active terminal is in the form of electrically isolated portions so that it can be energised just before the arrival of the guide head (11) and de-energised just after the departure thereof.

17. Assembly according to claim 1, characterised in that the value of the spacing angle between the rollers (12) and (13) is greater than 90°.

18. Assembly according to claim 1, characterised in that the value of the spacing angle between the rollers is greater than 120°.

## Patentansprüche

1. Führungs und Stromversorgungseinheit für ein Straßentransportfahrzeug an einer am Boden angeordneten Führungsschiene (2) mit einem mit der Führungsschiene zusammenwirkenden, schwenkbaren Träger (10), der einen Führungskopf (11) mit wenigstens einem Paar V-förmig geneigter, mit der Spitze dem Boden zugewandter Rollen (12, 13) aufweist, dadurch gekennzeichnet, daß die Schiene (2) am Boden einen als Rollspur für die Rollen (12, 13) des schwenkbaren Führungsträgers dienenden zentralen Führungssteg (6) sowie Leiterbahnen zur elektrischen Stromversorgung aufweist, der zentrale Führungssteg (6) Schutzteile (20, 21) trägt, die einen linearen Verschluß des die Leiterbahnen enthaltenden Raums außerhalb des Durchlaufbereichs des Führungskopfes (11) bilden und der Führungskopf eine momentane Öffnung dieses Verschlusses bei Durchlauf von den Leiterbahnen anliegenden Kontaktstücken bewirkt.

2. Einheit nach Anspruch 1, dadurch gekennzeichnet, daß die Schutzteile (20, 21) zwei Abdeckstücke aus einem flexiblen Material sind, die an dem zentralen Führungssteg (6) nachgiebig befestigte Lippen (22, 23) bilden.

3. Einheit nach Anspruch 1, dadurch gekennzeichnet, daß der Führungskopf (11) an wenigstens einer Seite jeder Rolle (12, 13) einen Stromabnehmer (39, 40) und ein Mittel zum Anheben der angrenzenden Lippe (22, 23) aufweist.

4. Einheit nach Anspruch 3, dadurch gekennzeichnet, daß der Stromabnehmer (39, 40) und das Mittel zum Anheben über eine gemeinsame Verbindungsstütze (37, 38) am Führungskopf (11) gehalten sind.

5. Einheit nach Anspruch 3 oder 4, dadurch gekennzeichnet, daß der Führungskopf (11) vor und hinter jeder Rolle (12, 13) einen Stromabnehmer und ein Mittel zum Anheben der angrenzenden Lippe (22, 23) aufweist.

6. Einheit nach Anspruch 2, dadurch gekennzeichnet, daß die Schutzteile (20, 21) einen Winkelquerschnitt mit zwei Flügeln (26, 27) aufweisen, die über einen Haltebereich (24, 25) unter Bildung eines unteren Flügels (26) und eines oberen Flügels (27) verbunden ist.

7. Einheit nach Anspruch 2, dadurch gekennzeichnet, daß der zentrale Führungssteg (6) zwei Aufnahmerinnen (28, 29) mit einer oberen Schulter und einer unteren Haltekehle aufweist, in die jeweils der untere Flügel eines Schutzteils (20, 21) eingesetzt ist, wobei die Innenseite jedes unteren Flügels (26, 27) als Rollspur für die jeweilige Rolle (12, 13) dient.

8. Einheit nach Anspruch 6 oder 7, dadurch gekennzeichnet, daß der Haltebereich (24, 25) in Stützkontakt mit der oberen Schulter steht, die als oberer Anschlag dient.

9. Einheit nach Anspruch 3, dadurch gekennzeichnet, daß jeder Stromabnehmer (24, 25) und jedes Mittel zum Anheben vorne oder hinten einen Schuh (35, 36) in Form einer Schar aufweist, um die obere Lippe (22, 23) des Schutzteils (20, 21) zum Anheben nach oben auszulenken und den Durchlauf der Rollen (12, 13) und der Kontaktstücke zu ermöglichen.

10. Einheit nach Anspruch 1, dadurch gekennzeichnet, daß der zentrale Führungssteg (6) aus zwei symmetrischen, ein Führungsprofil (9) für die Rollen (12, 13) bildenden Teilen gebildet ist, von denen die oberen Profilteile (9) von dem linearen Gleitverschluß (52) besetzt sind, der in Gestalt zweier Hohlprofile (60, 61) mit einem halbkreisförmigen Querschnitt ausgebildet ist, deren ebene Flächen einander zugekehrt sind

11. Einheit nach Anspruch 10, dadurch gekennzeichnet, daß die Führungsprofile (9) in ihrem Innenraum zwei Leiterbahnen aufweisen, die jeweils unter Gewährleistung einer Bewegung des Annäherns an eine isolierte Zwischenlage elastisch belastet sind, wobei die Leiterbahnen mit einem Abstand angeordnet sind, der sich bei Eindringen eines Kontaktstücks (49) vergrößern kann.

12. Einheit nach Anspruch 10 oder 11, dadurch gekennzeichnet, daß die Führungsprofile (9) und die Rollen (12, 13) für die Stromrückleitung sorgen.

13. Einheit nach Anspruch 10 oder 11, dadurch gekennzeichnet, daß die Stromrückleitung durch verschiedene, an den Profilen schleifende Kontakte der Rollen (12, 13) gesichert ist.

14. Einheit nach Anspruch 10 oder 11, dadurch gekennzeichnet, daß die einander zugekehrten Seiten der Hohlprofile (60, 61), die einen linearen Gleitverschluß (59) bilden, komplementäre oder ineinander eingreifende Formen aufweisen.

15. Einheit nach Anspruch 10 oder 11, dadurch gekennzeichnet, daß das Kontaktstuck (40) als Lammelle ausgebildet ist.

16. Einheit nach Anspruch 1, dadurch gekennzeichnet, daß die an den aktiven Anschluß angeschlossene Leiterbahn zur elektrischen Stromversorgung von unabhängigen elektrischen Leiterstücken gebildet ist, um diese unmittelbar vor Anfahrt des Führungskopfes (11) unter Spannung zu setzen und unmittelbar nach Wegfahrt des Führungskopfes (11) abzuschalten.

17. Einheit nach Anspruch 1, dadurch gekennzeichnet, daß der Öffnupgswinkel zwischen den Rollen (12, 13) größer als 90° ist.

18. Einheit nach Anspruch 1, dadurch gekennzeichnet, daß der Öffnungswinkel zwischen den Rollen größer als 120° ist.
